(19) **Europäisches Patentamt**

**European Patent Office**

**Office européen des brevets**

(11) Veröffentlichungsnummer : **0 279 389 B1**

(12) # EUROPÄISCHE PATENTSCHRIFT

(45) Veröffentlichungstag der Patentschrift :
**10.04.91 Patentblatt 91/15**

(51) Int. Cl.$^5$ : **C01B 3/40, B01J 23/78**

(21) Anmeldenummer : **88102129.9**

(22) Anmeldetag : **13.02.88**

(54) **Katalysator für die Dampfreformierung von Kohlenwasserstoffen.**

(30) Priorität : **18.02.87 DE 3705183**

(43) Veröffentlichungstag der Anmeldung :
**24.08.88 Patentblatt 88/34**

(45) Bekanntmachung des Hinweises auf die
Patenterteilung :
**10.04.91 Patentblatt 91/15**

(84) Benannte Vertragsstaaten :
**DE FR GB NL**

(56) Entgegenhaltungen :
**DE-A- 2 431 983**
**FR-A- 2 268 746**
**GB-A- 1 195 428**
**GB-A- 1 283 780**
**US-A- 4 707 351**

(73) Patentinhaber : **SÜD-CHEMIE AG**
**Lenbachplatz 6**
**W-8000 München 2 (DE)**

(72) Erfinder : **Burgfels, Götz, Dr. Dipl.-Chem.**
**Angerweg 20**
**W-8201 Bad Feilnbach (DE)**
Erfinder : **Kochloefl, Karl, Dr. Dipl.-Chem.**
**Justus-von-Liebig-Strasse 3**
**W-8206 Bruckmühl-Heufeld (DE)**

(74) Vertreter : **Reitzner, Bruno, Dr. et al**
**Patentanwälte Dipl.-Ing. R. Splanemann Dr. B.**
**Reitzner, Dipl.-Ing. K. Baronetzky Tal 13**
**W-8000 München 2 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Katalysator für die Dampfreformierung von Kohlenwasserstoffen mit erhöhter Temperaturwechselbeständigkeit, enthaltend Nickel auf einem Aluminiumoxid-Calciumaluminat-Träger.

Die Dampfreformierung von Kohlenwasserstoffen ist das zur Zeit großtechnisch bedeutsamste Verfahren zur Produktion von Wasserstoff. Die Dampfreformierung von Kohlenwasserstoffen ist eine endotherme Reaktion, und die dazu benötigte Wärme muß von außen dem Reaktionssystem zugeführt werden. Eine technisch wichtige Variante dieses Verfahrens ist die autotherme Dampfreformierung, bei welcher die Wärmebilanz der Reaktion durch Partialoxidation der Kohlenwasserstoffe, insbesondere des Methans, aufrechterhalten wird.

Die Dampfreformierung stellt sehr hohe Anforderungen an die mechanischen Eigenschaften der Katalysatoren, insbesondere der Träger. Die Katalysatoren müssen eine hohe mechanisch-thermische Belastbarkeit und Temperaturwechselbeständigkeit bei Temperaturen über 800°C, insbesondere über 1000°C und Drücken um 30 bar in einer im wesentlichen aus Dampf, Wasserstoff und Kohlendioxid bestehenden Atmosphäre haben. Andererseits müssen die Katalysatoren zur Erzielung einer hohen Aktivität eine Trägermatrix mit offener Porenstruktur haben. Diese Forderung konnte bisher nur auf Kosten einer Verminderung der mechanisch-thermischen Belastbarkeit der Katalysatoren erfüllt werden.

Unter mechanischer Festigkeit versteht man im allgemeinen die Seitendruckfestigkeit (SDF), die in bekannter Weise an tabletten- oder ringförmigen Katalysatoren gemessen wird.

Die Fähigkeit eines Katalysators, schroffen Temperaturwechseln und den dadurch entstehenden hohen thermischen Spannungen, d.h. den durch thermische Behandlung hervorgerufenen mechanischen Spannungen, ohne Bruch zu widerstehen, nennt man Temperaturwechselbeständigkeit (nachstehend TWB genannt). Übersteigen die thermischen Spannungen an irgendeiner Stelle im Formkörper einen kritischen Wert (die "Bruchfestigkeit"), so entstehen an dieser Stelle Risse, die unter Umständen zum vollständigen Bruch des Formkörpers führen können.

Man hat bereits versucht, die thermische Beständigkeit der Träger (hauptsächlich auf der Basis von Aluminiumoxid) von nickelhaltigen Katalysatoren für die Dampfreformierung von Kohlenwasserstoffen durch Verwendung von bestimmten Zusätzen zu verbessern.

So enthalten beispielsweise die in der EP-A-0 130 835 beschriebenen Aluminiumoxid-Träger Oxide bestimmter seltener Erden.

Die DE-C-24 31 983 beschreibt einen ein feuerfestes Calciumaluminat enthaltenden Nickelkatalysator für die Dampfreformierung von Kohlenwasserstoffen, dessen Träger 10 bis 60 Gew.-% Calciumoxid, 0 bis 30 Gew.-% Berylliumoxid, Magnesiumoxid und/oder Strontiumoxid, 30 bis 90 Gew.-% Aluminiumoxid und weniger als 0,2 Gew.-% Siliciumdioxid enthält. Die Erhöhung der Festigkeit wird in der Hauptsache auf die Verwendung von Calciumaluminat mit einem niedrigen Siliciumdioxidgehalt zurückgeführt.

Ferner ist es aus der Literaturstelle Khim. Tekhnol. (UdSSR), $\underline{5}$, 34 (1979) bekannt, daß die mechanisch-thermischen Eigenschaften von Katalysatoren für die Methan-Dampfreformierung verbessert werden können, wenn dem als Träger verwendeten Aluminiumoxid kleinere Mengen an anderen Oxiden zugesetzt werden.

Besonders günstig hat sich hierbei der Zusatz von CaO, $Sc_2O_3$ oder $TiO_2$ erwiesen. Dieser Literaturstelle kann aber nicht entnommen werden, daß durch einen Zusatz von kleinen Mengen an $TiO_2$ die festigkeitssteigernde Wirkung von Calciumaluminat in Trägern auf der Basis von Aluminiumoxid noch weiter verbessert werden kann.

Schließlich ist aus der US-A-4707351 ein Verfahren zur Umsetzung eines Kohlenwasserstoffs oder Kohlenwasserstoffderivats mit Wasserdampf und/oder Kohlendioxid über einem oxidischen Trägerkatalysator bekannt. Der Träger enthält weniger als 1 Gew.-% $SiO_2$ und besteht aus einer calcinierten Aluminatzementmasse, die weniger als 50 Gew.-% eines anderen oxidischen Materials, wie Zirkondioxid und Titandioxid in Mengen von vorzugsweise nicht mehr als 10 Gew.-%, enthält. Titandioxid ist in keinem Beispiel erwähnt, was darauf hindeutet, daß es nur als Verunreinigung angesehen und seine Wirkung bei Verwendung von bestimmten Anteilen nicht erkannt wurde.

Der Erfindung liegt die Aufgabe zugrunde, bei einem Katalysator für die Dampfreformierung von Kohlenwasserstoffen, der Nickel auf einem Aluminiumoxid-Calciumaluminat-Träger enthält, die mechanisch-thermische Festigkeit, insbesondere die Temperaturwechselbeständigkeit, zu erhöhen, so daß ein derartiger Katalysator unter den bei der Dampfreformierung herrschenden Reaktionsbedingungen auch nach einer längeren Betriebsdauer nicht zerfällt.

Diese Aufgabe wird dadurch gelöst, daß der Träger 0,8 bis 5, vorzugsweise 1 bis 2,5 Gew.-% Titandioxid enthält und daß das Calciumaluminat mindestes teilweise als röntgenographisch definierte Hibonit-[CaO($Al_2O_3$)$_6$]-Phase in einer α-$Al_2O_3$-Matrix vorliegt.

Ohne den Zusatz der Titankomponente bzw. bei höheren $TiO_2$Gehalten bilden sich andere instabile, d.h. weniger temperaturwechselbeständige Calciumaluminatphasen. Dies hat den vorzeitigen Bruch des Trägers und damit auch des Katalysators zur Folge. Ein gebrochenes Material verursacht eine deutliche Erhöhung des Strömungswiderstandes im Reaktor, so daß dieser nach verhältnismäßig kurzer Betriebsdauer außer Betrieb gesetzt werden muß. Ferner wirkt das $TiO_2$ bei höheren Konzentrationen als Sintermittel, wodurch das Porenvolumen und damit auch die Aktivität abnimmt.

Vorzugsweise liegt die elementare Zusammensetzung des Trägers in folgenden Grenzen :

Al = 30 bis 52 Gew.-%
Ca = 1 bis 25 Gew.-%
Ti = 0,48 bis 3,0 Gew.-%
(Rest Sauerstoff).

Der erfindungsgemäße Katalysator enthält 2 bis 20, vorzugsweise 7 bis 15 Gew.-%, insbesondere etwa 10 Gew.-% Nickel (bezogen auf das Gewicht des Trägers). Neben dem Nickel kann der erfindungsgemäße Katalysator auch kleinere Mengen an Kobalt enthalten.

Der Träger liegt vorzugsweise als Schüttgut in Form von Kugeln, Zylindern, Ringen oder anderen Formkörpern vor.

Der erfindungsgemäße Katalysator wird vorzugsweise dadurch hergestellt, daß man den Träger durch Mischen von Aluminiumoxidhydrat, Calciumaluminat und einer kolloidal dispergierten Titanverbindung mit Wasser, Formen des Gemisches, Vorcalcinieren und Brennen der Formkörper herstellt und die so hergestellten Träger-Formkörper mit Nickel belegt.

Besonders bevorzugt verwendet man Metatitansäure ($TiO_2 \cdot xH_2O$),

die in Form einer kolloidalen wäßrigen Dispersion vorliegt. Es wurde festgestellt, daß die Bildung der für die Erhöhung der Temperaturwechselbeständigkeit verantwortlichen Hibonit-Phase im wesentlichen eine Funktion des Dispersionsgrades der Titankomponente ist, da bei Verwendung von Titandioxid in Form von gröberen Pigmentteilchen die Umwandlung des Calciumaluminats in die Hibonit-Phase verhältnismäßig langsam verläuft. Im allgemeinen sollte die Teilchengröße der Titankomponente 80000 nm nicht überschreiten. Besonders geeignet ist Metatitansäure mit folgender Siebanalyse.

| < 40 µm | 40–63 µm | 63–80 µm |
|---------|----------|----------|
| 20 % | 77 % | 3 % |

Im allgemeinen wird der Träger so hergestellt, daß Aluminiumoxidhydrat mit einem Glühverlust von 33 bis 35%, Calciumaluminatzement und Metatitansäure ($TiO_2 \cdot xH_2O$) mit einem Glühverlust von 5 bis 15% unter Zugabe von Graphit als Preßhilfsmittel und etwa 15 bis 20 Gew.-% Wasser zu einer Masse gemischt wird, die nach dem Kneten zu Formkörpern geformt wird. Diese Träger-Formkörper werden dann getrocknet und vorzugsweise einer Dampfhärtung unterzogen. Anschließend werden die Träger-Formkörper vorcalciniert und gebrannt.

Zur Feststellung der physikalischen Eigenschaften werden dann Proben entnommen, mit denen nach den üblichen Methoden das Schüttgewicht (SG), die Seitendruckfestigkeit (SDF), die scheinbare Dichte (SD), die Temperaturwechselbeständigkeit (TWB) und die Schlagfestigkeit (Falltest) untersucht werden. Außerdem werden die spezifische Oberfläche, das Porenvolumen und die Porenverteilung bestimmt.

Wenn diese Daten den Anforderungen entsprechen, werden die Träger-Formkörper mit einer wäßrigen Nickelsalzlösung, insbesondere einer Nickelnitratlösung, imprägniert, indem sie vorzugsweise in der heißen Salzlösung getaucht werden. Dann wird das Nickelsalz thermisch zersetzt (bei Verwendung von Nickelnitrat bei etwa 450°C). Das Tauchen kann mehrmals wiederholt werden, insbesondere, wenn man einen Katalysator mit einem hohen Nickelgehalt wünscht. Nach jeder Tauchung wird das Nickelsalz thermisch zersetzt. Bei der thermischen Zersetzung bildet sich Nickeloxid, welches unter Prozeßbedingungen oder mit einem Reduktionsmittel zu Nickel reduziert wird.

Gegenstand der Erfindung ist ferner die Verwendung des vorstehend beschriebenen Katalysators für die Dampfreformierung von Kohlenwasserstoffen, insbesondere für die autotherme Methan-Dampfreformierung. Die Dampfreformierung wird vorzugsweise bei Temperaturen von mehr als 800°C bei erhöhtem Druck durchgeführt.

Die Erfindung ist durch die nachstehenden Beispiele erläutert.

Beispiel 1 (Vergleichsbeispiel)

a) Herstellung des Trägers

150 kg Aluminiumoxidhydrat und 50 kg Calciumaluminatzement werden trocken gemischt. Danach wird Wasser zugegeben, und das Mischen wird fortgesetzt. Anschließend werden 10 kg Graphit zugegeben, und nach dem Mischen wird die entstandene Masse an der Luft so lange getrocknet, bis der Trocknungsverlust 4-10 Gew.-% beträgt. Danach wird die Masse gemahlen und durch ein 4 × 4 mm-Sieb durchgelassen. Dieses Material wird anschließend zu Ringen 17 × 17 × 6 mm verpreßt. Diese werden dann mit Dampf gehärtet, calciniert und schließlich gebrannt.

Die physikalisch-mechanischen Daten des hergestellten Trägers sind in den Tabellen I und II zusammengestellt.

b) Herstellung des Nickelkatalysators

140 kg des hergestellten Trägers werden in 1000 Liter einer wäßrigen Nickelnitratlösung (1400 kg Ni $(NO_3)_2$) getaucht. Nach der Tauchung wird der imprägnierte Träger bei 450°C bis zur vollständigen Zersetzung des Nickelnitrats calciniert. Diese Prozedur wird zwei- bzw. dreimal wiederholt, damit ein Nickelgehalt im fertigen Katalysator von etwa 10 Gew.-% erreicht wird.

Der Katalysator wird bei 750°C 3 Stunden mit einem Gemisch aus $H_2O$ und $H_2$ aktiviert. Der aktivierte Katalysator wird einem Methan-Dampfreformierungstest unterworfen.

Die Reaktionsbedingungen waren wie folgt :

T = 750°C, Molverhältnis $H_2O/CH_4$ = 3, $CH_4$-Raumgeschwindigkeit = 3500 NLiter/h.

Die Ergebnisse des Aktivätstests sind in Tabelle III angegeben.

Beispiel 2

a) Herstellung eines $TiO_2$-haltigen Trägers (1 Gew.-% $TiO_2$).

150 kg Aluminiumoxidhydrat 50 kg Calciumaluminatzement und 1,9 kg Metatitansäure werden trocken gemischt und anschließend gemäß Beispiel 1 weiterverarbeitet.

Die physikalisch-mechanischen Daten des hergestellten Trägers sind in den Tabellen I und II zusammengestellt. Das Röntgenbeugungsdiagramm zeigte die für die Hibonit-Phase charakteristischen Werte

| Beugungswinkel | rel. Intensität | D (Å) |
|---|---|---|
| 34.1786 | 100 | 2.6227 |
| 36.2089 | 100 | 2.4794 |
| 67.4094 | 70 | 1.3906 |

b) Herstellung des Nickelkatalysators.

142 kg des hergestellten Trägers werden, wie in Beispiel 1 aufgeführt, in wäßriger Nickelnitratlösung getaucht und weiter verarbeitet. Der hergestellte Nickelkatalysator wird wie in Beispiel 1 einem Methan-Dampfreformierungstest unterworfen.

Die Ergebnisse sind in Tabelle III angegeben.

Beispiel 3

a) Herstellung eines $TiO_2$-haltigen Trägers (5 Gew.-$TiO_2$)

150 kg Aluminiumoxidhydrat, 50 kg Calciumaluminatzement und 10 kg Metatitansäure werden trocken gemischt und anschließend gemäß Beispiel 1 weiterverarbeitet.

Die physikalisch-mechanischen Daten des hergestellten Trägers sind in den Tabellen I und II zusammengestellt. Die für die Hibonit-Phase charakteristischen Röntgenbeugungslinien waren etwas schwächer als bei dem Träger nach Beispiel 2, da sich neben dem Hibonit auch andere Calciumaluminatphasen bildeten.

b) Herstellung des Nickelkatalysators.

145 kg des hergestellten Trägers werden, wie in Beispiel 1 aufgeführt, in wäßriger Nickelnitratlösung getaucht und weiter verarbeitet. Der hergestellte Nickelkatalysator wird wie in Beispiel 1 einem Methan-Dampf-freformierungstest unterworfen. Die Ergebnisse sind in Tabelle II angegeben.

Tabelle I: Physikalisch-chemische Daten des Trägermaterials
(Ringe)

| Technische Daten | Beispiel 1 | Beispiel 2 | Beispiel 3 |
|---|---|---|---|
| 1-ltr.SG g/l | 710 | 705 | 771 |
| SDF $\phi$ kg | 60 | 63 | 60 |
| TWB-Abschreck-[1] zahlen | 6 | 18 | 8 |
|  | 6 | 53 | 27 |
|  | 7 | 59 | 29 |
|  | 8 | 59 | 44 |
|  | 8 | 67 | 50 |
|  | 15 | 68 | 52 |
| Format $\phi$ mm | 16,1 | 16,3 | 15,9 |
| Höhe mm | 16,2 | 16,4 | 15,3 |
| $\phi$i mm | 5,4 | 5,5 | 5,2 |
| SD[2] g/cm$^3$ | 1.532 | 1.484 | 1.650 |
| Falltest[3] Ganze Ringe | 80 | 100 | 96 |
| Halbierte Ringe | 20 | -- | 4 |
| Stücke | -- | -- | -- |
| $TiO_2$-Gehalt Gew.-% | -- | 1,03 | 4,8 |

1) Bestimmung des Widerstandes gegen schroffen Temperaturwechsel nach dem Wasserabschreckverfahren für feuerfeste Steine gemäß DIN 51 068, Teil 1. Das Maß für die Temperaturwechselbeständigkeit ist die Anzahl der unter den Bedingungen dieser Norm ertragenen Abschreckungen (Abschreckzahl). Diejenige Abschreckung, bei der ein Probekörper zerstört wird, ist mitzuzählen.
2) Scheinbare Dichte, bzw. Rohdichte nach DIN 51 065, Teil 1.
3) Schlagfestigkeit von 100 Ringen. Eine Metallkugel (28g) fällt aus 35 cm auf die Probe.

Tabelle II:  Porosität und Oberfläche der hergestellten Träger

| Bezeichnung Träger | Porengrößenverteilung (%)a) (PSD) (nm) | | | | Poren-volumen (cm³/g) | BET-Oberfläche (m²/g)  b) |
|---|---|---|---|---|---|---|
| | >1750 | 1750-80 | 80-14 | 14-7,5 | | |
| Beispiel 1 | 1,8 | 85,6 | 6,4 | 6,0 | 0,38 | 3 |
| Beispiel 2 | 2,8 | 97,0 | 0,4 | 0,5 | 0,36 | 1 |
| Beispiel 3 | 1,4 | 84,7 | 6,2 | 7,4 | 0,33 | 1 |

a) Quecksilberporosimetrie
b) DIN 66 131

Tabelle III: Ergebnisse des Aktivitätstests

| Katalysator | Ni-Gehalt (Gew.-%) | $CH_4$-Umsatz (Mol%) |
|---|---|---|
| Beispiel 1 | 9,6 | 98,4 |
| Beispiel 2 | 9,8 | 98,2 |
| Beispiel 3 | 7,4 | 89,6 |

6

Wie aus Tabelle I ersichtlich ist, führt die Zugabe von TiO$_2$ zu einer deutlichen Erhöhung der Temperaturwechselbeständigkeit des Trägers. Besonders erwähnenswert ist auch die enge Porengrößenverteilung des Katalysators von Beispiel 2 (97,0% des gesamten Porenvolumens im Bereich von 1750-80 nm).

## Ansprüche

1. Katalysator für die Dampfreformierung von Kohlenwasserstoffen, enthaltend Nickel auf einem Aluminiumoxid-Calciumaluminat-Träger, dadurch gekennzeichnet, daß der Träger 0,8 bis 5 Gew.-% Titandioxid enthält und daß das Calciumaluminat mindestens teilweise als röntgenographisch definierte Hibonit-[CaO(Al$_2$O$_3$)$_6$]-Phase in einer α-Al$_2$O$_3$-Matrix vorliegt.

2. Katalysator nach Anspruch 1, dadurch gekennzeichnet, daß die elementare Zusammensetzung des Trägers in folgenden Grenzen liegt : Al = 30 bis 52 Gew.-%, Ca = 1 bis 25 Gew.-%, Ti = 0,48 bis 3,0 Gew.-% (Rest Sauerstoff).

3. Katalysator nach Anspruch 1 oder 2, dadurch gekennzeichnet, daß er 2 bis 20, vorzugsweise 7 bis 15 Gew.-% Nickel (bezogen auf das Gewicht des Trägers) enthält.

4. Katalysator nach einem der Ansprüche 1 bis 3, dadurch gekennzeichnet, daß der Träger als Schüttgut in Form von Kugeln, Zylindern, Ringen oder anderen Formkörpern vorliegt.

5. Verfahren zur Herstellung des Katalysators nach einem der Ansprüche 1 bis 4, dadurch gekennzeichnet, daß man den Träger durch Mischen von Aluminiumoxidhydrat, Calciumluminat und einer kolloidal dispergierten Titanverbindung mit Wasser, Formen des Gemisches, Vorcalcinieren und Brennen der Formkörper herstellt und die so hergestellten Träger-Formkörper mit Nickel belegt.

6. Verfahren nach Anspruch 5, dadurch gekennzeichnet, daß man als Titanverbindung Metatitansäure (TiO$_2$ · xH$_2$O) verwendet.

7. Verfahren nach Anspruch 5 oder 6, dadurch gekennzeichnet, daß man die Träger-Formkörper vor dem Calcinieren einer Dampfhärtung unterzieht.

8. Verfahren nach einem der Ansprüche 5 bis 7, dadurch gekennzeichnet, daß man die Träger-Formkörper mit einer wäßrigen Nickelsalzlösung, insbesondere einer Nickelnitratlösung, imprägniert, und das Nickelsalz thermisch zu Nickeloxid zersetzt.

9. Verwendung des Katalysators nach einem der Ansprüche 1 bis 4 bzw. des nach einem der Ansprüche 5 bis 8 hergestellten Katalysators für die Dampfreformierung von Kohlenwasserstoffen, insbesondere für die autotherme Methan-Dampfreformierung.

10. Verwendung nach Anspruch 9, dadurch gekennzeichnet, daß man die Dampfreformierung bei Temperaturen von mehr als 800°C bei erhöhtem Druck durchführt.

## Claims

1. A catalyst for the steam reforming of hydrocarbons, containing nickel on an alumina-calcium aluminate carrier, characterised in that the carrier contains 0.8 to 5% by weight of titanium oxide, and in that the calcium aluminate is present at least partly as a radiographically defined hibonite [CaO(Al$_2$O$_3$)$_6$]-phase in an α-Al$_2$O$_3$-matrix.

2. A catalyst according to Claim 1, characterised in that the elementary composition of the carrier lies within the following limits : Al = 30 to 52% by weight, Ca = 1 to 25% by weight, Ti = 0.48 to 3.0% by weight (the remainder oxygen).

3. A catalyst according to Claim 1 or 2, characterised in that it contains 2 to 20, preferably 7 to 15, % by weight of nickel (based on the weight of the carrier).

4. A catalyst according to any one of Claims 1 to 3, characterised in that the carrier is present as bulk material in the form of spheres, cylinders, rings or other moulded bodies.

5. A method of preparing the catalyst according to any one of Claims 1 to 4, characterised in that the carrier is prepared by mixing alumina hydrate, calcium aluminate and a colloidally dispersed titanium compound with water, moulding the mixture, precalcinating and baking the moulded bodies, and the carrier moulded bodies thus prepared are coated with nickel.

6. A method according to Claim 5, characterised in that metatitanic acid (TiO$_2$ · xH$_2$O) is used as the titanium compound.

7. A method according to Claim 5 or 6, characterised in that, prior to the calcination, the carrier moulded bodies undergo steam hardening.

8. A method according to any one of Claims 5 to 7, characterised in that the carrier moulded bodies are impregnated with an aqueous nickel salt solution, in particular a nickel nitrate solution, and the nickel salt decomposes thermally to nickel oxide.

9. Use of the catalyst according to any one of Claims 1 to 4 or of the catalyst prepared according to any one of Claims 5 to 8 for the steam reforming of hydrocarbons, in particular for autothermal methane-steam reforming.

10. Use according to Claim 9, characterised in that the steam reforming is carried out at temperatures of more than 800°C, under increased pressure.

**Revendications**

1. Catalyseur pour le reformage à la vapeur des hydrocarbures, contenant du nickel sur un support d'oxyde d'aluminium-aluminate de calcium, caractérisé par le fait que le support contient 0,8 à 5% en poids de dioxyde de titane, et que l'aluminate de calcium se présente au moins partiellement sous la forme d'une phase d'hibonite-[CaO(Al$_2$O$_3$)$_6$] définie aux rayons X, dans une matrice d'α-Al$_2$O$_3$

2. Catalyseur selon la revendication 1, caractérisé par le fait que la composition élémentaire du support se situe dans les limites suivantes :

Al =   30 à 52% en poids ;
Ca =   1 à 25% en poids ;
Ti =   0,48 à 3,0% en poids
        (le reste étant de l'oxygène).

3. Catalyseur selon la revendication 1 ou 2, caractérisé par le fait qu'il contient 2 à 20, de préférence, 7 à 15% en poids de nickel (par rapport au poids du support).

4. Catalyseur selon l'une des revendications 1 à 3, caractérisé par le fait que le support se présente, en tant que produit en vrac, sous la forme de sphères, de cylindres, d'anneaux ou autres corps façonnés.

5. Procédé de fabrication du catalyseur selon l'une des revendications 1 à 4, caractérisé par le fait qu'on prépare le support par mélange avec de l'eau d'oxyde d'aluminium hydraté, d'aluminate de calcium et d'un composé du titane dispersé de façon colloïdale, façonnage du mélange, précalcination et cuisson des corps façonnés, et qu'on enrobe de nickel les corps façonnés de support ainsi préparés.

6. Procédé selon la revendication 5, caractérisé par le fait qu'on utilise, comme composé du titane, de l'acide métatitanique (TiO$_2$ · xH$_2$O).

7. Procédé selon la revendication 5 ou 6, caractérisé par le fait qu'on soumet les corps façonnés de support, avant la calcination, à un durcissement à la vapeur.

8. Procédé selon l'une des revendications 5 à 7, caractérisé par le fait qu'on imprègne les corps façonnés de support par une solution aqueuse de sel de nickel, en particulier une solution de nitrate de nickel, et qu'on décompose le sel de nickel par voie thermique en oxyde de nickel.

9. Utilisation du catalyseur selon l'une des revendications 1 à 4 ou du catalyseur fabriqué selon l'une des revendications 5 à 8, pour le reformage à la vapeur d'hydrocarbures, en particulier pour le reformage autothermique à la vapeur du méthane.

10. Utilisation selon la revendication 9, caractérisée par le fait qu'on conduit le reformage à la vapeur à des températures de plus de 800°C, sous une pression élevée.